# EUROPEAN PATENT APPLICATION

(11) **EP 2 897 093 A1**
(43) Date of publication of application: **22.07.2015**
(21) Application number: 15151175.5
(22) Date of filing: 14.01.2015
(51) Int. Cl.: G06Q 10/10, G06Q 30/02

(54) **Personal information management system**

(30) Priority: 15.01.2014 JP 2014004978
(71) Applicant: Knowledgesuite, Inc., Minato-ku Tokyo 108-0022 (JP)
(72) Inventor: Inaba, Yuichi, Tokyo (JP)
(74) Representative: Klunker . Schmitt-Nilson . Hirsch

(57) **Abstract**

A personal information management system which can easily collect and manage various personal information. A personal information management system according to the present invention includes: an input processing section to acquire input personal information that includes one or more input data items; a search processing section to perform search using some or all of the input data items as one or more keywords to acquire retrieved personal information; a selection processing section to allow an operator to select a retrieved data item to be saved from among the retrieved personal information; and a registration processing section to store the input personal information and the retrieved data item selected using the selection processing section in a storage device in a manner that the input personal information and the retrieved data item are associated with each other.

## Description

### BACKGROUND OF THE INVENTION

### FIELD OF THE INVENTION

The present invention relates to a personal information management system for managing personal information such as customer information.

### DESCRIPTION OF THE PRIOR ART

A business card management system is known as one of systems for managing information on customers, business partners, and the like (for example, see Japanese Patent Laid-Open No. 2000-112989).

The business card management system is a system in which character information printed on a business card is input as electronic data by manual entry, optical character recognition technology or the like, and managed by a computer. In such a system, a name, a company name, a phone number, an email address, and the like can be computerized and managed for each of customers and the like.

Additionally, in a business card management system according to Japanese Patent Laid-Open No. 2000-112989, customer information converted to electronic data is centrally managed by a server so that information on a plurality of clients can be shared.

If there are numerous partners with whom business cards have been exchanged, or there is a long period between business card exchange and reunion or the like, it is often the case that the face of such a business card exchange partner cannot be remembered. Therefore, it is desirable that information managed by the business card management system includes not only character information on a business card exchange partner but also a photograph of his/her face.

However, there are not many persons who use a business card on which his/her face is printed. Although the face of a business card exchange partner may be photographed using a camera, it is troublesome and may also make a bad impression on the business card exchange partner.

Besides the face photograph, it is convenient if information on a business card exchange partner can be easily added and managed in addition to that described on the business card.

### SUMMARY OF THE INVENTION

An object of the present invention is to provide a personal information management system in which various personal information can be easily added and managed.

To this end, a personal information management system according to the present invention includes: an input processing section to acquire input personal information that includes one or more input data items; a search processing section to perform search using some or all of the input data items as one or more keywords to acquire retrieved personal information; a selection processing section to allow an operator to select a retrieved data item to be saved from among the retrieved personal information; and a registration processing section to store the input personal information and the retrieved data item selected using the selection processing section in a storage device in a manner that the input personal information and the retrieved data item are associated with each other.

In the personal information management system according to the present invention, it is desirable that the retrieved personal information contains a face image of a person corresponding to the input personal information.

In the personal information management system according to the present invention, it is desirable that the search processing section identifies profile information corresponding to the input personal information from a system that provides a social networking service, and acquires some or all of the profile information as the retrieved personal information.

In the personal information management system according to the present invention, it is desirable that the input processing section acquires some or all of the input data items by converting a character printed on a business card to character information using optical character recognition technology.

In the personal information management system according to the present invention, it is desirable that the personal information management system includes: a terminal device including the input processing section and the selection processing section; and a management server including the search processing section and the registration processing section.

According to the personal information management system of the present invention, retrieved personal information is acquired by search processing using input personal information, and an operator is made to select from among the retrieved personal information a retrieved data item to be registered, so that various personal information can be precisely and easily collected and managed.

In the personal information management system of the present invention, by acquiring as the retrieved personal information, a face image of a person corresponding to the input personal information, the face image of the person corresponding to the input personal information can be easily acquired and managed.

In the personal information management system of the present invention, by identifying a profile corresponding to the input personal information from a system providing a social networking service to acquire the retrieved personal information, a useful retrieved data item can be easily acquired and managed.

In the personal information management system of the present invention, by converting a character printed on a business card to character information using optical character recognition technology, the input data items can be easily acquired.

In the personal information management system of the present invention, by performing search and storing by a management server based on an operation on a terminal device, the load on the terminal device can be reduced, and registered personal information can be easily shared by a plurality of terminal devices.

### BRIEF DESCRIPTION OF THE DRAWINGS

Other objects and advantages of the present invention will be described with reference to the accompanying drawings, in which:
FIG. 1 is a conceptual diagram illustrating the overall configuration of an information management system according to a first embodiment;
FIG. 2 is a block diagram conceptually illustrating a functional configuration of a terminal device according to the

### first embodiment; and

FIG. 3 is a block diagram conceptually illustrating a functional configuration of a management server according to the first embodiment.

### DETAILED DESCRIPTION

Hereinafter, embodiments of the present invention will be described with reference to the drawings.

### First Embodiment

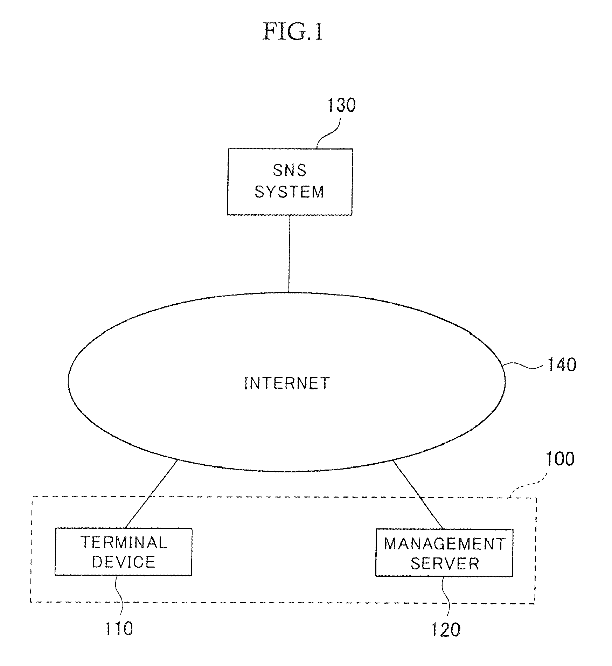

A personal information management system according to the first embodiment will be described with reference to FIG. 1 to FIG. 3.

FIG. 1 is a conceptual diagram illustrating the overall configuration of a personal information management system 100 according to the first embodiment.

As shown in FIG. 1, the personal information management system 100 includes a terminal device 110 and a management server 120. The personal information management system 100 is communicatively connected to an SNS (Social Networking Service) system 130 via the Internet 140.

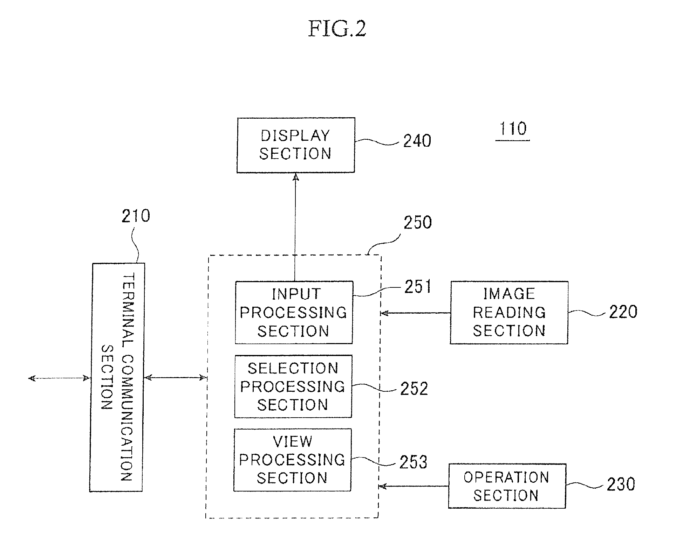

The terminal device 110 is used when an operator registers personal information in the management server 120 or views the registered personal information. For example, a personal computer may be used as the terminal device 110. Although only one terminal device 110 is shown in FIG. 1, a plurality of terminal devices 110 may be used. The terminal device 110 will be described later in detail with reference to FIG. 2.

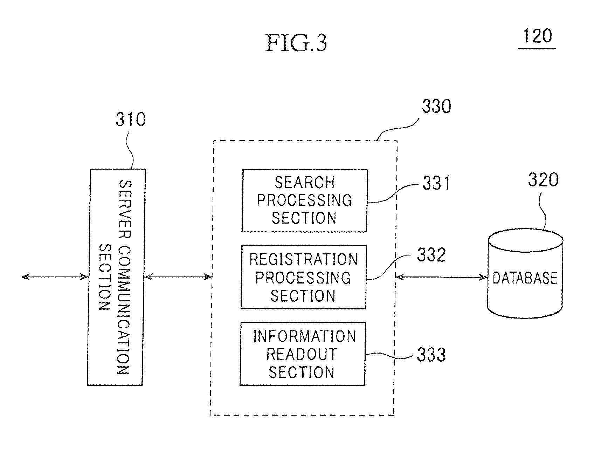

When the management server 120 receives personal information input into the terminal device 110 (hereinafter, referred to as "input personal information"), the management server 120 accesses the SNS system 130 to request search processing (as described later) which uses some or all of data items included in the input personal information (hereinafter, referred to as "input data items"). The management server 120 will be described later in detail with reference to FIG. 3. Although the terminal device 110 and the management server 120 are communicatively connected through the Internet 140 in this embodiment, they may be connected through any other type of communication line such as a LAN (Local Area Network).

The SNS system 130 is a system for communication between members, and has a function of search for a profile of each member. The SNS system 130 uses the input data items received from the management server 120 to identify profile information (which corresponds to "retrieved personal information" of the present invention) of a member corresponding to the input personal information, and returns profile data (which corresponds to "retrieved data item" of the present invention) included in the profile information to the management server 120. This profile information may include a face image of a person corresponding to the input personal information. Profile data to be returned may be all the profile data included in the profile information or only a pre-specified type of profile data. Although only one SNS system 130 is shown in FIG. 1, a plurality of SNS systems 130 may be used.

FIG. 2 is a block diagram conceptually illustrating a functional configuration of the terminal device 110.

As shown in FIG. 2, the terminal device 110 includes a terminal communication section 210, an image reading section 220, an operation section 230, a display section 240, and a terminal processing section 250.

The terminal communication section 210 is used for communicatively connecting the terminal device 110 to the management data server 120.

The image reading section 220 reads image information from a paper or the like under the control of the terminal processing section 250, and sends the read image information to the terminal processing section 250. In the first embodiment, a case where image information of a business card is read will be described as an example. For example, a general-purpose image scanner may be used as the image reading section 220.

The operation section 230 is a device by which an operator operates the terminal device 110, inputs data and so on, and is, for example, a keyboard or a computer mouse.

The display section 240 performs various displays under the control of the terminal processing section 250. For example, a liquid crystal display may be used as the display section 240.

The terminal processing section 250 constructs an input processing section 251, a selection processing section 252, and a view processing section 253 as software, by executing a predetermined application program. Needless to say, these sections 251 to 253 may be constructed as hardware.

The input processing section 251 performs processing to acquire input personal information including a predetermined input data item. For this purpose, the input processing section 251 controls the image reading section 220 to acquire image information of a business card. The input processing section 251 then converts the image information to character information using a well-known optical character recognition technology (OCR) or the like, thereby acquiring the input personal information of the relevant person. Typically, the input personal information includes data items such as a name, a company name, a department, a duty position, a company address, and a company telephone number of the relevant person. The acquired input personal information is sent to the management server 120 via the terminal communication section 210.

The selection processing section 252 performs processing to allow an operator to select profile data to be registered, from among profile information obtained by search processing of the management server 120. For this purpose, the selection processing section 252 receives the profile information from the management server 120 via the terminal communication section 210, and causes the display section 240 to display each profile data included in the profile information. The selection processing section 252 then requests the operator to select profile data to be registered, using a way in which a selection procedure to the effect is displayed on the display section 240 or the like. When the profile data to be registered is selected by the operator operating the operation section 230, the selection processing section 252 sends the selection result to the management server 120 via the terminal communication section 210.

The view processing section 253 performs processing to cause the personal information registered in the management server 120 (i.e., each input data item included in the input personal information, and the profile data selected corresponding to the input personal information) to be viewed. For this purpose, the view processing section 253 identifies personal information requested to be viewed, based on the operator's operation on the operation section 230 or the like. Further, the view processing section 253 requests the management server 120 to send the identified personal information via the terminal communication section 210. Upon receiving the personal information registered in the management server 120 via the terminal communication section 210, the view processing section 253 displays this personal information on the display section 240.

Although the view processing section 253 is provided in the terminal device 110 in the first embodiment, a communication terminal for registering personal information and a communication terminal for viewing the personal information may be provided independently.

FIG. 3 is a block diagram conceptually illustrating a functional configuration of the management server 120.

As shown in FIG. 3, the management server 120 includes a server communication section 310, a database 320, and a server processing section 330.

The server communication section 310 is used for communicatively connecting the management server 120 to the terminal device 110 and the SNS system 130.

The database 320 stores input personal information received from the terminal device 110 and profile data selected by the operator of the terminal device 110. For example, a storage device using a hard disk or the like is used for the database 320. The database 320 may be provided in the management server 120, or may be communicatively connected to the management server 120 through the Internet 140, a LAN (not shown) or the like.

The server processing section 330 constructs a search processing section 331, a registration processing section 332, and an information readout section 333 as software, by executing a predetermined application program. Needless to say, these sections 331 to 333 may be constructed as hardware.

The search processing section 331 receives the input personal information from the terminal device 110 and accesses the SNS system 130 via the server communication section 310 to request a search which uses some or all of input data items included in the input personal information. The search processing section 331 then sends profile information obtained by the search to the terminal device 110 via the server communication section 310. As described above, this profile information may include a face image of a person corresponding to the input personal information as the profile data.

The registration processing section 332 receives the input personal information acquired by the input processing section 251 of the terminal device 110 from the search processing section 331, and stores the input personal information in the database 320. Furthermore, the registration processing section 332 receives the selection result of the selection processing section 252 via the server communication section 310. The registration processing section 332 then reads out profile data to be registered from the search processing section 331 according to the selection result of the selection processing section 252. Thereafter, the registration processing section 332 stores the extracted profile data and the corresponding input personal information in association with each other as registered personal information in the database 320.

The information readout section 333 reads out from the database 320 the registered personal information corresponding to requests from the view processing section 253 of the terminal device 110 or any suitable communication terminal. The information readout section 333 then sends the read-out registered personal information to the terminal device 110 or the suitable communication terminal via the server communication section 310.

When registered personal information is to be viewed, the registered personal information desired to be viewed needs to be searched for and identified. Preferably, the information readout section 333 of the personal information management system 100 is configured to be able to identify registered information desired to be viewed, not only from an input data item of the registered personal information (that is, a data item acquired from a business card or the like) but also from profile data stored in association with the personal information. For example, if a face image is newly captured by, for example, an image sensor incorporated in a wearable device, and is compared with a face image included in registered personal information, the registered personal information in the management server 120 can be identified and viewed using the new face image.

A procedure for registering personal information in the management server by the personal information management system 100 according to the first embodiment will be described as follows.

First, an operator uses the terminal device 110 (see FIG. 2) to acquire input personal information from a business card. For this purpose, by operating the operation section 230, the operator causes the input processing section 251 to control the image reading section 220 to read the business card as image information. The input processing section 251 then converts the image information to character information so that the personal information printed on the business card is acquired as the character information. As described above, the input personal information acquired in this way includes input data items such as a name, a company name, a department, a duty position, a company address, and a company telephone number of the relevant person.

The input processing section 251 transmits the acquired input personal information via the terminal communication section 210. This input personal information is received by the search processing section 331 (see FIG. 3) via the server communication section 310 of the management server 120.

The search processing section 331 extracts a predetermined input data item from the received input personal information. The input data item to be extracted is optionally, for example, a name and a company name. In addition, the number of input data items to be extracted may be one or more. Thereafter, the search processing section 331 accesses the SNS system 130 through the server communication section 310 and the Internet 140 (see FIG. 1) to request the SNS system 130 to perform a profile search using the extracted input data item. For example, a name or a logical AND of a name and a company name may be used as a search expression used for this profile search, but any search expression may be used.

The SNS system 130 searches for profile information on the request from the search processing section 331. If profile information is identified by the search, the SNS system 130 sends the profile information to the management server 120 via the Internet 140. Such profile information typically includes a plurality of items of profile data, and often also includes a face image of the person corresponding to the input personal information. Further, from among profile data belonging to the profile information identified by the search, only a predetermined part of the profile data may be sent as a search result to the management server 120. On the other hand, if it is determined that there is no profile information corresponding to the input personal information according to the search, the SNS system 130 returns information indicating this fact.

The search processing section 331 of the management server 120 receives the information from the SNS system 130 via the server communication section 310.

Thereafter, the search processing section 331 forwards the profile information received from the SNS system 130 to the terminal device 110 via the Internet 140. This profile information is received by the selection processing section 252 via the terminal communication section 210.

The selection processing section 252 causes the display section 240 to display each profile data included in the received profile information. The selection processing section 252 then requests the operator to select profile data to be registered, using indication on the display section 240 or the like way. The operator selects the profile data to be registered by operating the operation section 230. The selection processing section 252 sends the selection result to the management server 120 via the terminal communication section 210. On the other hand, if there is no profile data to be registered, this fact is sent as the selection result. The selection result is received by the registration processing section 332 via the server communication section 310 of the management server 120.

Upon receiving the selection result, the registration processing section 332 stores it temporarily in an internal memory (not shown). The registration processing section 332 receives the input personal information acquired by the input processing section 251 of the terminal device 110 from the search processing section 331. Further, the registration processing section 332 receives profile data corresponding to the operator's selection result from the profile information saved in the search processing section 331. Thereafter, the registration processing section 332 stores the input personal information and the selected profile data in association with each other as registered personal information in the database 320.

Accordingly, registration of the personal information with the management server 120 is completed, so that the personal information can be viewed using the view processing section 253 of the terminal device 110 and a device other than the terminal device 110.

It is desirable to obtain the approval of the relevant person before acquiring and registering profile information using the SNS system 130.

As described above, according to the personal information management system 100 of the first embodiment, the search processing section 252 can search for profile information using input personal information acquired by the input processing section 251, and an operator is allowed to select profile data to be saved from among the profile information identified by the search, so that various personal information can be precisely and easily collected and managed.

Further, according to the personal information management system 100, a face image of a person of interest can be acquired as profile information and registered in association with personal information, so that the face image of the person can be easily acquired and managed.

Further, according to the personal information management system 100, profile information is acquired from a social networking service system, so that useful profile data can be easily acquired and managed.

In addition, according to the personal information management system 100, an input data item acquired from a business card is used as a search keyword to search for profile information, so that the input data item can be easily acquired.

Furthermore, according to the personal information management system 100, the management server 120 performs search and storing based on an operation on the terminal device 110, so that the load on the terminal device 110 can be reduced, and registered information can be easily shared by a plurality of terminal devices.

Although the input personal information is acquired from a business card in the first embodiment, the input personal information may be acquired from other types of medium as a matter of course. Input personal information of a plurality of persons may be acquired at the same time from, for example, a name list. Further, input personal information may be manually input using a keyboard or the like.

Although the social networking service system 130 is used to acquire profile information in the first embodiment, other search systems such as a common internet search system may be used to collect information related to a person of interest.

## Claims

1. A personal information management system comprising:
an input processing section to acquire input personal information that includes one or more input data items;
a search processing section to perform search using some or all of the input data items as one or more keywords to acquire retrieved personal information;
a selection processing section to allow an operator to select a retrieved data item to be saved from among the retrieved personal information; and
a registration processing section to store the input personal information and the retrieved data item selected using the selection processing section in a storage device in a manner that the input personal information and the retrieved data item are associated with each other.

2. The personal information management system according to claim 1, wherein the retrieved personal information contains a face image of a person corresponding to the input personal information.

3. The personal information management system according to claim 1 or 2, wherein the search processing section identifies profile information corresponding to the input personal information from a system that provides a social networking service, and acquires some or all of the profile information as the retrieved personal information.

4. The personal information management system according to any one of claims 1 to 3, wherein the input processing section acquires some or all of the input data items by converting a character printed on a business card to character information using optical character recognition technology.

5. The personal information management system according to any one of claims 1 to 4, comprising:
a terminal device including the input processing section and the selection processing section; and
a management server including the search processing section and the registration processing section.
